**Europäisches Patentamt**

**European Patent Office**

**Office européen des brevets**

(11) Publication number: **0 119 346**
**B1**

(12) **EUROPEAN PATENT SPECIFICATION**

(45) Date of publication of patent specification: **28.02.90**

(21) Application number: **83306498.3**

(22) Date of filing: **26.10.83**

(51) Int. Cl.⁵: **F 16 F 15/28, F 16 F 1/16**

(54) **Counterbalance device and torsion member usable therein.**

(30) Priority: **21.03.83 US 477337**

(43) Date of publication of application:
**26.09.84 Bulletin 84/39**

(45) Publication of the grant of the patent:
**28.02.90 Bulletin 90/09**

(84) Designated Contracting States:
**DE FR GB**

(56) References cited:
**DE-A-2 131 468**
**DE-C- 749 208**
**DE-C- 966 825**
**FR-A-1 102 401**
**GB-A- 519 524**
**US-A-3 476 375**

(73) Proprietor: **AIRPOT CORPORATION**
**27 Lois Street**
**Norwalk Connecticut 06851 (US)**

(72) Inventor: **Leonard, George H.**
**327 Hollow Tree Ridge**
**Darien Connecticut 06820 (US)**

(74) Representative: **Allam, Peter Clerk et al**
**LLOYD WISE, TREGEAR & CO. Norman House**
**105-109 Strand**
**London WC2R 0AE (GB)**

Courier Press, Leamington Spa, England.

## Description

The present invention relates to a counterbalance device to act between first and second parts articulately connected to one another, and to a particular torsion member construction peculiarly well-adapted for use therein.

There are many instances where one part is articulately connected to another so as to be movable between first and second positions, the nature of that part being such that its effective weight varies as it thus moves. For example, when a heavy lid is lifted from a horizontal position to a vertical position, it seems heaviest at the beginning of that movement and its effective weight decreases as it moves toward its vertical open position. Hence the force necessary to move it is greatest when the lid is horizontal and least when the lid is vertical, thus creating a tendency to slam the lid into its vertical position and also, because of the effective weight of the lid, tending to cause the lid to slam into its horizontal position. In addition, under normal circumstances, if the lid is released in an intermediate position it will tend to fall back to its horizontal position, usually with considerable force. Consequently, counterbalance devices are employed, which are effective to minimize the differences in apparent weight of the lid as it moves from one operative position to the other, and preferably effective to exert a force on the lid at any given intermediate position which is substantially equal and opposite to the force that the lid would normally exert, so that if the lid is released in an intermediate position it will tend to stay in that position.

Actual physical counterbalancing by means of an added and appropriately located weight involves significant problems of weight, space, cost and safety. Therefore many different artificial counterbalancing devices have been proposed, but few if any can produce perfect or neutral counterbalancing (by neutral counterbalancing is meant counterbalancing such that the lid will remain in whaterver position it finds itself, and will exert a smooth, low resistance to movement from that position) without complex and expensive structure, and most take up a significant amount of space and add significant weight to the overall construction. Many such devices utilize hydraulic or pneumatic cylinders, which are subject to significant maintenance problems. Springs, including torsion springs, have been used in the past for this purpose, but they either are extremely bulky, heavy and expensive or they can be used only for relatively light work. Even the bulkiest spring hinge becomes unsuitable when truly heavy lids are involved, and for such heavy lids the art has turned to the use of hydraulic shock absorbers or gas springs, but they are significantly more costly, present very substantial space problems, and obstruct side access when the lid is lifted.

Moreover, torsion spring assemblies as used in the past have involved structures individually designed for a particular application. When a new application calling for even a slightly different torsion characteristic is presented, a new and different structure must be designed for that purpose. This adds greatly to the cost of such devices. Moreover, adjustability of such structures, to accommodate external or internal changes or to make a given structure adaptable for use in a plurality of environments, is difficult and unreliable.

DE—C—749208 discloses a counterbalance device for acting between two parts which are pivotally connected to one another. The device comprises a pair of supports which are adapted to be secured to one of the pivoted parts·and which are spaced from one another along an axis. Secured to these supports are socket members which defined recesses which face one another along the axis and which non-rotatably receive the ends of a torsion member which extends longitudinally along the axis. A sleeve extends between the socket members and is mounted so that the sleeve and socket members are relatively rotatable, the torsion member being freely received within the sleeve. Means operatively connect the torsion member and the second of the pivoted parts. In this prior counterbalance device, the sleeve acts solely to protect the torsion member and retain lubricant therearound.

The use of a bundle of rods or regular polygonal cross-section to form a torsion member is known *per se* from FRA—1102401.

US—A—3476375 shows a counterbalance device for acting between two pivotally connected parts in which the torque is transmitted to the torsion member of the device by means of a cam and a cooperating cam follower.

It is an object of the present invention to provide an improved counterbalance device which can provide neutral counterbalancing for heavy lid-like parts, particularly those that swing about a basically horizontal axis.

Another object of this invention is to provide a torsion spring device which is well adapted for use in such a counterbalance device but which is also capable of more generalised use, being capable of exerting torsional resistance to light forces or quite heavy forces, all with the same basic design.

In accordance with one aspect, therefore, the present invention provides a counterbalance device to act between first and second parts pivotally connected to one another, comprising a pair of spaced supports adapted to be secured to said first part and spaced from one another along an axis, socket members secured to said supports, extending toward one another, and having recesses facing one another along said axis, a longitudinally extending torsion member having ends non-rotatably received in said recesses and extending along said axis, and a sleeve extending between said socket members, said sleeve and socket members being relatively rotatable and said torsion member being freely received within said sleeve, and means operatively connecting said torsion member to said second part; the device being characterized in that said sleeve is mounted on said socket members for rotation relative thereto, and in that said operative connecting means comprises anchor means inside the sleeve and non-rotatably connected to said torsion member and non-rotatably connected to said sleeve at a first point spaced from said socket members, and further means externally non-rotatably mounted on said sleeve at a second point axially spaced from said first point, whereby said sleeve provides a structural driving connection between said torsion member and said second part.

The torsion spring device of the present invention includes an elongated sleeve, a pair of socket members aligned with each other along the axis of the sleeve and co-operating with opposite ends of said sleeve to provide bearing support for the sleeve, said socket means being adapted to be secured non-rotatably to an external member and having respective recesses that open towards each other, a torsion member extending axially inside said sleeve and having opposite end portions received non-rotatably in the recesses of said socket members, and means for developing torsion in said torsion member, the device being characterized in that said torsion member comprises bundled rods of regular polygonal cross-section, in that there are anchor means disposed between and spaced substantially from both of said recesses for securing said sleeve to said bundled rods, thereby developing two lengths of bundled rods extending between said sleeve and said recesses, and in that said means for developing torsion in said bundled rods are secured to said sleeve at a point axially spaced from said anchor means for securing said sleeve to said bundled rods, whereby the sleeve provides a structural driving connection between said torsion member and said means secured to said sleeve for developing torsion in said bundled rods.

In accordance with the preferred embodiments of the counterbalance device of the present invention, the lid or other part to be counterbalanced is provided with one element of a cam follower combination, the other element of that combination being non-rotatably connected to the sleeve in which the torsion member is received. Since the torsion characteristics of the torsion member are known, and the apparent weight-position characteristics of the lid are known, the cam can readily be shaped to impart to the system the desired overall counterbalancing characteristics, such as, preferably, a neutral counterbalancing. Simple, compact devices made in this fashion can accommodate lid swings of up to 180° and exert counterbalancing torques varying, purely by way of example, between 0 and 56.5 Nm (between 0 and 500 inch pounds). The construction is such that balanced torsional effects can be readily achieved. The point along the length of the torsion member where it is secured either to the support or to the sleeve or both can be made adjustable, thereby to modify the operating characteristics, but without sacrifice in the sturdiness and simplicity of the parts.

While many different types of torsion members can be employed, the torsion spring device construction here disclosed and claimed is exceptionally well suited for use in the disclosed counterbalance device, but is also capable of more generalized use. Thus, the preferred torsion member is formed of a plurality of elongated narrow torsion elements of essentially regular polygonal, cross-section arranged in a predetermined grouping, with sides of adjacent elements engaging one another, the exposed surfaces of those elements defining at least in part a polygonal shape. Non-rotative engagement with the torsion member at a given point along its length preferably is achieved by means of simple bushing-like parts having polygonal openings into which the grouping of elongated torsion elements is received, the shape of those openings being so related to the shape of the periphery of that grouping as to non-rotatably engage at least some of said elements and to confine said elements so that they are maintained in said predetermined grouping. In most cases the polygonal opening in a given bushing-like part is capable of receiving groups of different numbers of elongated torsion elements without sacrifice of the desired operating conditions, and that capability may be extended through the use of dummy torsion elements or other inserts. Thus a single standard construction can produce torsion members having widely vaying torque characteristics — a grouping formed of a lesser number of elongated elements will produce a lesser torque for a given angular displacement than will a torsion member having a greater number of such elongated elements.

Moreover, that bushing-like part in many cases can readily be slid along the length of the torsion member, thus varying the location of the point where it engages the torsion member, thereby to vary the effective length of the torsion member, and hence its torque characteristic — the greater the effective length, the less the torque that need be exerted for a given angular displacement.

Further variation in the torque characteristics which can be produced from a given standardized construction is afforded through the ability to utilize elongated narrow torsion elements of different cross-sectional sizes in the same group.

The grouping of torsion elements is inherently exceedingly reliable and long-lived, but its reliability may be even further enhanced by surrounding it by a sheath of protective material, which will not only protect the torsion elements against adverse external influences such as moisture, grit or acid, but can also be used to assist in confining those elements to their proper locations within the grouping and to retain grease or other lubricant in position.

The points where the part to be counterbalanced and its support engage the group of torsion elements can be appreciably spaced from one another, thus producing torsion members of substantial length, so that the possibility of overstressing of the torsion elements is minimized. Moreover, one securing point can be intermediate the length of the torsion member, while the other points (in duplicate) are at the ends of the torsion member, thus producing a desirable balanced construction.

Embodiments of the invention will now he described with reference to the accompanying drawings, in which:

Figure 1 is a three quarter perspective view of the counterbalance device active on a pivotable part, the part being shown in vertical position;

Figure 2 is a view similar to Figure 1 but showing the part in horizontal position;

Figure 3 is a cross-sectional view, on an enlarged scale, of the counterbalance of Figure 1, taken along the axis thereof;

Figure 4 is a cross-sectional view taken along the line 4—4 of Figure 3;

Figure 5 is a cross-sectional view taken along the line 5—5 of Figure 4 but showing a modified structure having adjustment capability;

Figure 6 is a three quarter prospective exploded view of the parts making up the counterbalance device of Figure 5;

Figure 7 is a cross-sectional view similar to Figure 5 but showing a different way in which adjustability may be attained;

Figures 8A—E are schematic end views showing different arrangements of torsion members of hexagonal cross-section received in hexagonal apertures of different sizes;

Figures 9B and C illustrate non-hexagonal apertures for receiving two or three element torsion members respectively;

Figures 9D—F show different arrangements of hexagonal-cross-section torsion elements in special shaped aperture configurations and, optionally, in hexagonal apertures;

Figure 10 is a diagrammatic view showing the use of hexagonal-cross-section torsion elements of different diameters in a given hexagonal recess to form a torsion member;

Figure 11 is a side elevational view of a torsion member of the present invention with a sheath thereover;

Figure 12 is a side elevational view, partially broken away, of one way in which the sheathed torsion element of Figure 11 may be mounted;

Figure 13 is a view similar to Figure 12 but showing another mounting arrangement;

Figure 14 is an end view of the embodiment of Figure 13 taken in the direction of the arrows 14—14;

Figure 15 is a view similar to Figure 14 but showing an alternative embodiment;

Figure 16 is a side elevational view showing another way in which the end of the torsion member may be mounted;

Figure 17 is a cross-sectional view taken along the line 17—17 of Figure 16;

Figure 18 is a side elevational view, partially in cross-section, showing how the embodiment of Figure 11 may be mounted;

Figure 19 is a side cross-sectional view showing the way in which the torsion element may be mounted so that its axis can be shifted; and

Figure 20 is a cross-sectional view taken along the line 20—20 of Figure 19.

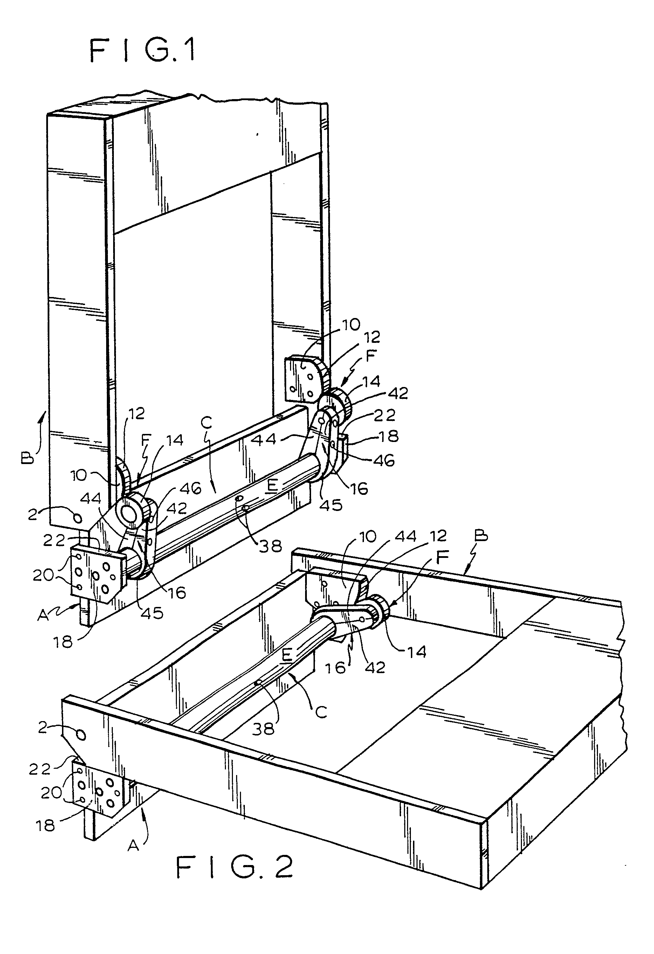

Broadly considered, the counterbalance device of the illustrated embodiments is designed to counterbalance two articulately connected parts generally designated A and B, here shown more or less schematically because of the wide variation possible in the nature of those parts. Part A is the fixed part, and part B is the movable part which is to be counterbalanced. Part B is pivotally connected to part A by shaft 2, the pivoting as shown being between a horizontal position as shown being between a horizontal position for part B. corresponding to a closed lid, and a vertical position thereof, corresponding to an open lid (Figures 2 and 1 respectively). A portion of part B is broken away so that the counterbalance device can be seen when the part B is in its horizontal position. Part B may be of appreciable weight. When it is in its vertical position shown in Figure 1 that weight is wholly carried by the shaft 2, so little or no force is required to move the lid from its vertical position, but when the lid is in its horizontal position, as shown in Figure 2, its weight acts downwardly at points remote from the shaft 2, so that a considerable amount of force is required to lift it. As the lid B is moved from its horizontal to its vertical position, the amount of force required to move it will progressively decrease, according to the cosine of the angle through which it is moved. What is desired is to counterbalance the part B, so that it will tend to remain in whatever position it may be placed, the counterbalancing force equalling and opposing the effective weight of the part B for that particular position.

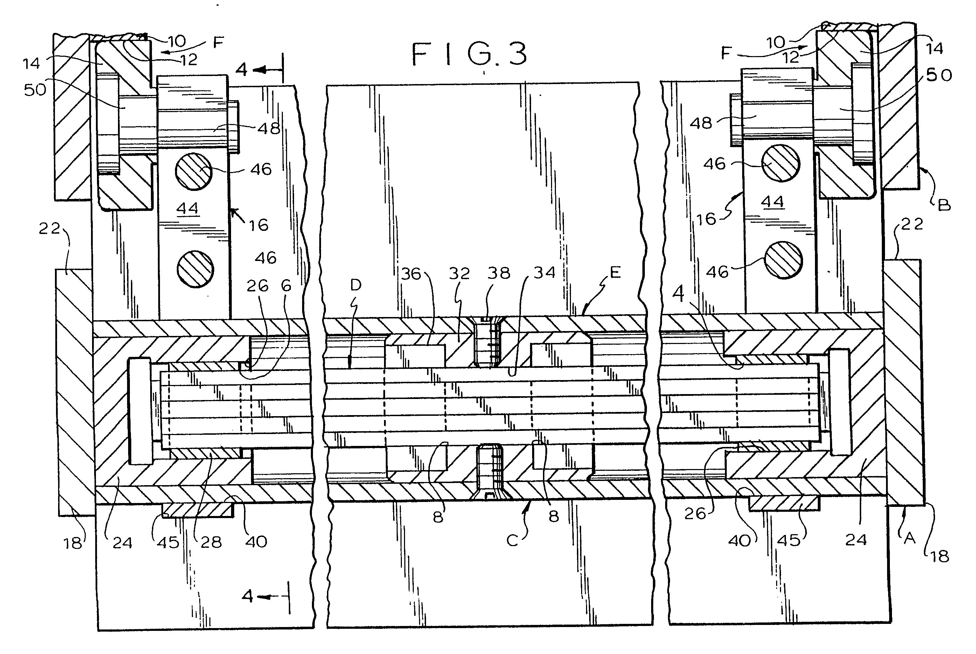

The illustrated counterbalance device in accordance with the present invention, generally designated C, comprises an elongated torsion member generally designated D (see Figures 3, 5 and 6) which, in the balanced form here shown, is non-rotatably secured adjacent its ends, at points severally designated 4 and 6 respectively, to the fixed part A. The torsion member D is surrounded by a sleeve generally designated E, which is rotatable relative to the member A and non-rotatably secured to the torsion member D at the point generally designated 8 spaced, preferably equidistantly, from the points 4 and 6. Hence rotation of the sleeve E with respect to the fixed support A will twist the torsion member D, and that torsion member will therefore exert a restraining torque at least roughly proportional to the degree to which it is twisted.

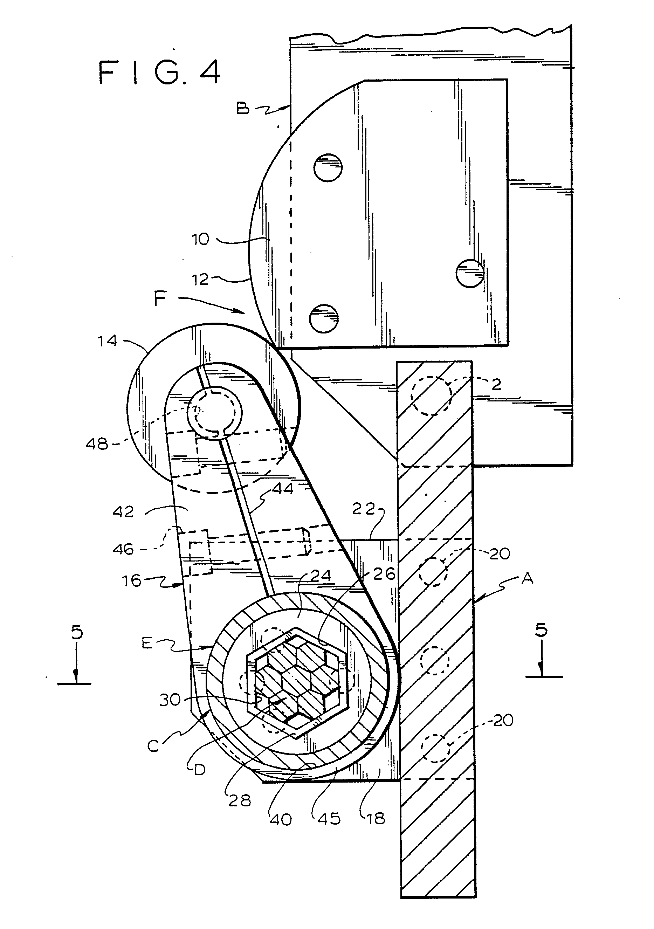

A cam-follower combination generally designated F is provided, one part of which is secured to the sleeve E and the other part of which is secured to the part B. As best shown in Figure 4, the part B carries a cam 10 having a cam surface 12 over which a cam follower 14 rides, the cam follower 14 being mounted on the sleeve E by means of arm 16. Because of the desirable balanced nature of the construction shown, with the sleeve E engaging the torsion member D approximately mid-way along its length and with the ends of the torsion member D being engaged with the fixed support A, two sets of cam-follower combinations F are provided, one at each end of the sleeve E, thus further carrying out the disclosed balanced construction arrangement.

For securing the ends of the counterbalance devices, the fixed part A is provided with a pair of brackets 18 secured thereto by screws 20 and each optionally having an upper surface 22 on which the part B is adapted to rest when in its horizontal position. Secured to the brackets 18, and extending inwardly therefrom, are socket members 24 having at their inner ends inwardly extending polygonal recesses 26. Those recesses 26 may be of a size larger than most or all of the torsion members D expected to be used therewith. Received within the recess 26 is an adapter 28 having a polygonal outer shape corresponding to that of the recess 26 so as to be non-rotatable relative to the part 24. The inside of the adapter 28 comprises a polygonal recess 30 which non-rotatably receives the end of the torsion member D. When torsion members D of different cross-sectional sizes are used in order to produce different torque characteristics, the only part of the construction which is non-standard, but instead is directly related to the size of the particular torsion member D, will be the adapter 28.

The sleeve E is rotatably journaled at its ends on the socket members 24, and is radially spaced from the torsion member D. In order to effect a non-rotatable connection between the sleeve E and the torsion member D, an anchor 32 having an appropriately shaped central polygonal opening 34 is slid over the torsion member D to the point 8 where connection is to be made thereto. The outer surface 36 of the anchor 32 is shaped so as to snugly fit within and be slidable along the interior of the sleeve E. The non-rotative connection between the sleeve E and the anchor 32 is effected by screw 38.

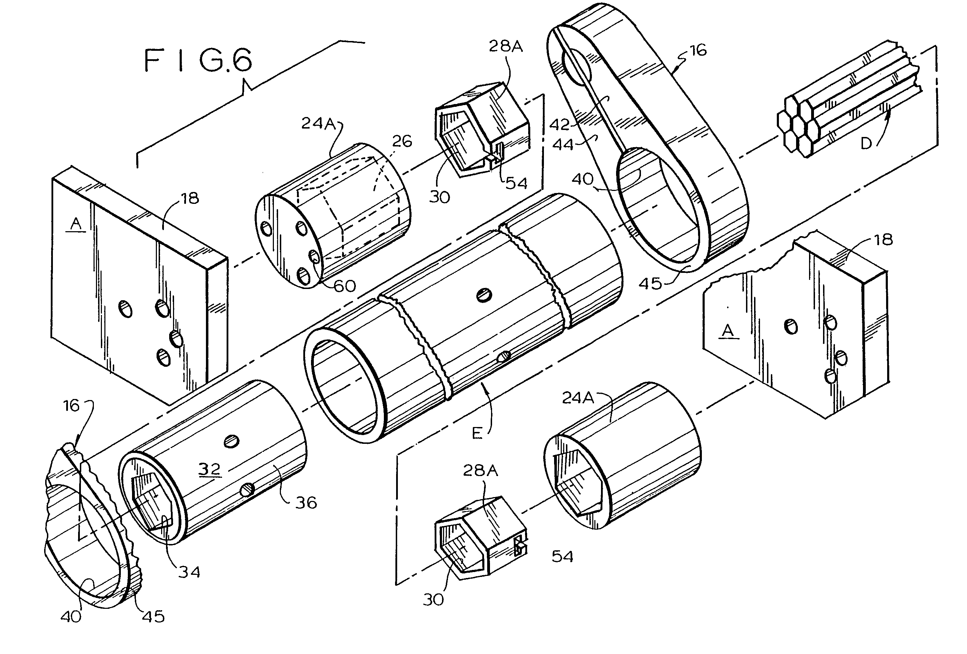

The arms 16 which carry the cam followers 14 may be of split construction, with cooperating parts 42 and 44 connected by curved length 45 to form central bore 40 which fits snugly over the sleeve E, as may best be seen from Figures 4 and 6. The arm 16 may be slid into position along the sleeve E, the arms 42 and 44 thereof then being clamped together by screws 46 so as to firmly non-rotatively clamp the arms 16 to the sleeve E. At their outer ends the arms 42 and 44 carry stud 48, preferably eccentric with respect to its extension 50 on which the cam follower 14 is journaled. This eccentricity permits a degree of adjustment in the positioning of the cam follower 14, thereby to vary the cam action, by rotating the stud 48 within the arm 16. The cam 10 is secured to the inside of the lid B, in such a position that its cam surface 12 is engaged by the cam follower 14 when the lid is in its vertical position as shown in Figure 1.

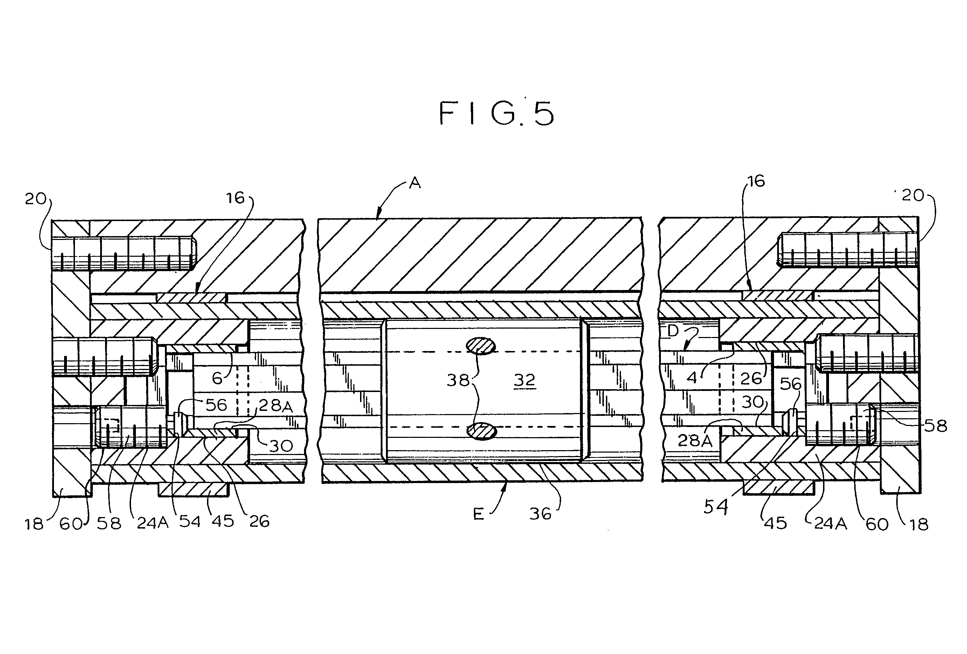

In the embodiment illustrated in Figure 3 the adapter 28 is fixed axially within the part 24 in any appropriate manner, and hence the effective distance between the points 4 and 6 on the one hand and the point 8 on the other hand remains constant, so that the resistance of the torsion member D to twisting will remain constant. The construction shown in Figures 5 and 6 permits the torsional characteristics of the torsion member D to be varied by adjustably changing the axial position of the adapter 28' of that embodiment. That adapter 28' is provided with a T-shaped slot 54 into which the head 56 projecting from screw 58 is received, that screw 58 being threadedly received in a tapped aperture 60 in the socket member 24, the screw 58 being accessible from the exterior of the bracket 18. By turning the screw 58 and thus causing it to move axially, the associated adapter sleeve 28' will also be moved axially, thereby moving the connecting point 4 or 6 closer to or farther from the connecting point 8 and thus varying the effective length of the torsion element D.

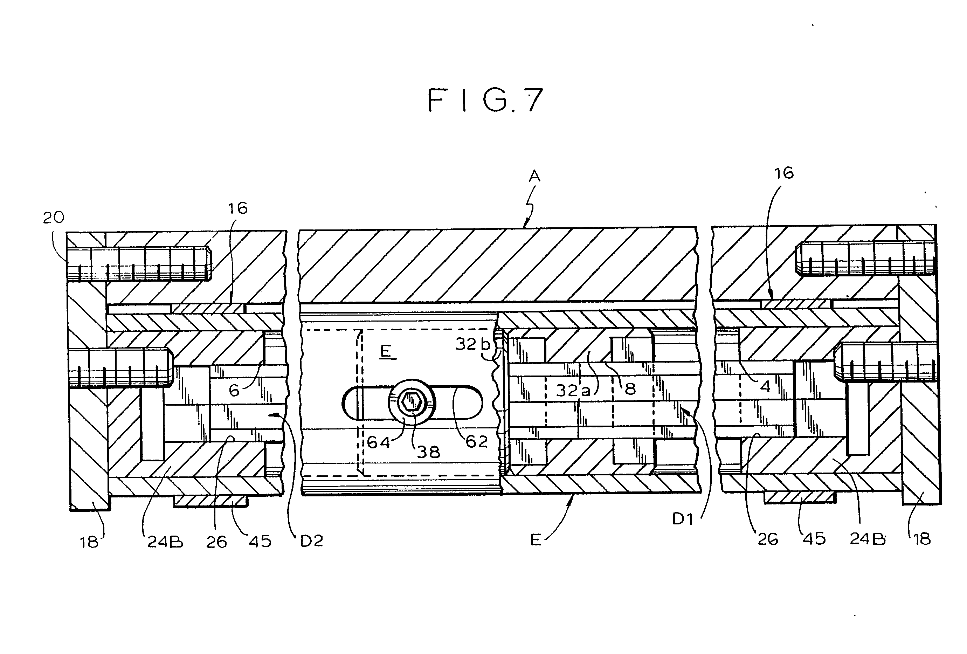

Figure 7 illustrates an alternative construction for achieving adjustability. In the embodiment of Figure 7 it is the point 8 which is shifted axially, rather than the point 4 or 6. To that end a pair of anchors 32A and 32B are provided, each slidable axially along the torsion member D. Each is provided with a screw 38 which passes through an elongated slot 62 formed in the sleeve E, with a washer or the like 64 pressed against the upper surface of the sleeve E by the head of the screw 38. Hence the position of each of the anchors 32A and 32B may be adjusted axially of the torsion member D to the extent permitted by the slots 62, thereby varying the effective length of those torsion members D.

It will be noted that in the embodiment of Figure 7 an optional mounting of the ends of the torsion element D directly into the appropriately shaped openings 26 of the socket member 24 is disclosed, thus eliminating the adapter 28. This arrangement could also be used in the embodiment of Figure 3, if the size of the torsion member D matched the size of the opening 26. It also may be noted that the construction of Figure 7 readily permits the use of two separate and axially aligned torsion members D1 and D2, each of a length approximately half the length of the single torsion member D shown in the embodiment of Figure 3. The screws 38 not only function to keep the anchor 32A or 32B from sliding axially with respect to the torsion member D, but also, when that torsion member D is made up of a plurality of individual elements, acts to clamp the ends of those torsion elements within the anchor 32A and thus retain the elements in position.

The torsion member D preferably comprises a plurality of elongated narrow rods of polygonal cross-section, here shown as hexagonal in cross-section. They may be made of steel or of any other structural material capable of reliably resisting torsional stresses upon repeated application of those stresses. Rods functioning as torsion springs have been known. The greater the maximum torque to be resisted, the greater has been the diameter of such rods (the term "diameter" is here used loosely to indicate maximum cross-sectional dimension, even though the cross-sectional shape is not circular), but as the diameter of the rods increased so did their stiffness, thus making them overly resistant to small forces and hence overly preventive of small movements. In the preferred form of torsion element here disclosed, made up of a plurality of relatively narrow rods grouped together in a particular fashion, that disadvantage of one piece torsion rods has been overcome — by using a plurality of rods of small cross-section grouped and mutually engaging for simultaneous twisting, structures are obtained which are capable of exerting extremely high torques while at the same time having a relatively "soft" reaction when low torques are applied, thus permitting slow build-up of torque with rotation and allowing large degrees of twisting without overstressing. Moreover, the use of a plurality of such rods permits a single standardized structure to be readily modified, for example, by changing the number of narrow torsion elements involved, to produce torsional characteristics extending over a very wide range.

One accidental, but commercially very important, advantage of this arrangement is that rods capable of use as individual torsion elements in this applicaiton are already readily available on the market, in various sizes, since such rods are conventionally used as Allen-head wrenches. These commercially available rods are hexagonal in cross-section, which makes it exceedingly easy, from a structural point of view, to achieve a non-rotatable relationship between a torsion element formed of such rods and the parts between torsion is to be exerted.

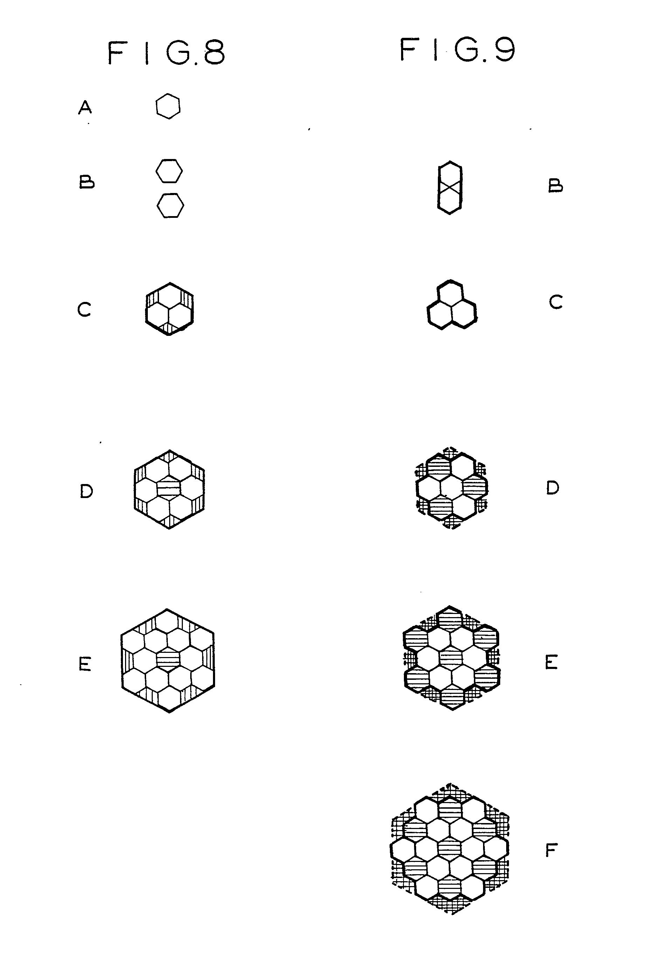

Figures 8 through 14 are illustrative of some of these points.

Figures 8A and B show respectively the shapes of the openings into which the ends of torsion elements may be received when those elements are formed respectively of one and two rods. When three rods are employed (see Figure 8C) the ends of the rods may be received within an hexagonal opening large enough to receive all three, with voids therearound, the voids in this and other figures being respresented by vertical shading. Figure 8D shows the use of a larger hexagonal opening for receiving groups of either 6 or 7 individual rods, the optional rod being indicated in this and other drawings by horizontal shading.

Figure 8E discloses the use of a still larger hexagonal opening for receiving the ends of torsion elements composed of either 12 or 13 rods.

Figure 9 is illustrative of the use of special shaped socket configurations to receive two rods (9B) three rods (9C), four through seven rods (9D), six through thirteen rods (9E) or twelve through nineteen rods (9F), the optional rods in each configuration being indicated by horizontal shading. The configuration of the special shaped sockets is indicated by heavy lines in Figure 9.

Moroever, the 4—7 rod arrangement of Figure 9D and the 6—13 rod arrangement of Figure 9E can be achieved in connection with hexagonal socket configurations, as indicated by the broken peripheral lines in those figures, through the use of inserts which fill the rods, represented in those figures 8D—F by crossed shading.

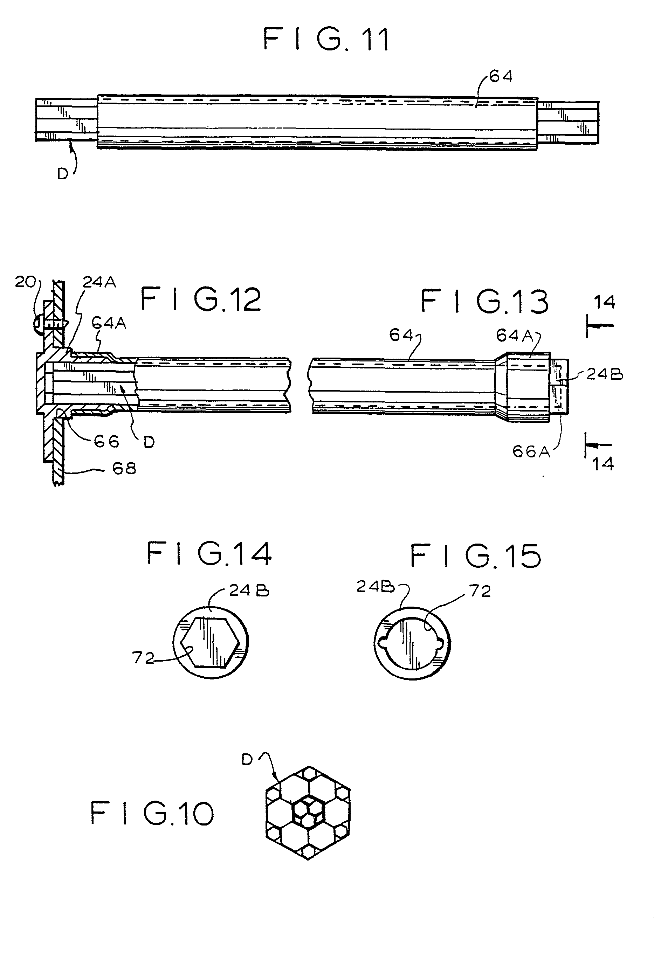

Figure 10 illustrates another way in which variation in torque characteristics can be achieved with a given socket configuration. In the embodiment of Figure 14 six relatively large cross-section rods are received within the socket configuration, from one to six smaller cross-section rods may optionally be employed at the periphery, and in addition either one large sized rod or three small sized rods may be employed at the center. Since if a rod has twice the diameter, it is sixteen times as stiff, variation of stiffness in this manenr is achieved.

It is also possible to partially fill the socket opening with dummy rods, rods which do not extend to the other point of connection. Only those rods which extend between the two points of connection, and which therefore are twisted when those points have relative rotation imparted to them, contribute to the torque effect.

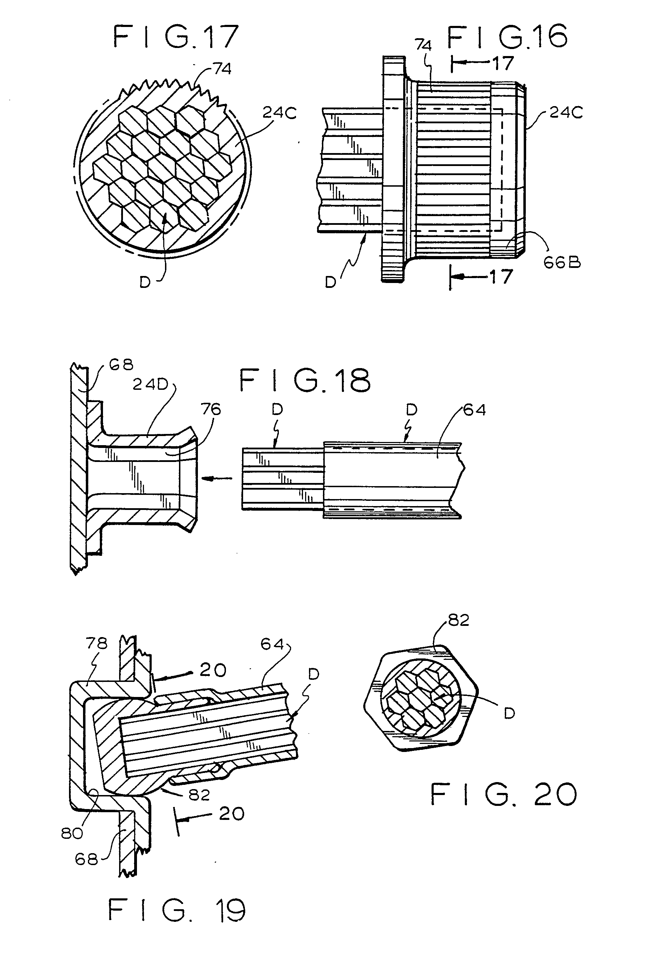

Once the ends of the rods are properly grasped in a socket, the rods will tend to be reliably held together, but when the sockets are separated from one another by an appreciable distance some additional means may be desired to retain the individual rods in their bundle. Moreover, it is often desired to insulate the rods from external adverse effects, such as water, dirt or acid, and it is sometimes advantageous to retain grease or other lubricant on the rods over their length. To accomplish that, as shown in Figure 11, a sheath 64 may be provided over the bundle of rods, which sheath may be formed from a heat-shrinkable plastics material. As shown in Figures 12 and 13, when the ends of the torsion member D are received in socket members such as the members 24A sand 24B of Figures 16 and 17 respectively, the ends 64A of the sheath 64 may be shrunk over the socket members, thus sealing the torsion member D quite effectively.

Figures 12—20 are illustrative of different ways in which the ends of the torsion member D may be connected to a part with which they are to be associated. In Figure 12 the socket member 24A is mounted in an aperture 66 on a supporting plate 68 and is secured thereto by screws 70. In the embodiment of Figure 13 the socket member 24B is provided at its end with an opening 72, two different embodiments of which are shown in Figures 14 and 15 respectively, which openings are adapted to receive matingly shaped operative elements such as shaft ends.

Figures 16 and 17 illustrate another type of mounting, in which the end of the torsion member D is received in a socket member 24C which is provided on its outer surface with knurling 74, so that it can be slid into an appropriately internally knurled operating element.

Figure 18 shows a socket member 24D which is welded to a supporting element 68 and into which the end of the torsion member D is slidable, the socket member 24D having an hexagonal socket opening 76 corresponding to the size and shape of the bundle of individual torsion rods.

Figures 19 and 20 show how the torsion member D can be mounted in a non-perpendicular position with respect to the supporting element 68. That element is provided with a socket member 78 having an hexagonal socket opening 80. The end of the torsion member D is fixedly mounted to a head 82 which, as may be seen in Figure 20, is hexagonal when viewed in the direction of its axis but which is ball-shaped when viewed from the side.

The conventional way to counterbalance a moving part is to provide a weight connected to that part but located on the opposite side of the pivotal axis, thereby to provide literal counterbalance. However, that approach is costly in material, significantly adds to the weight of the overall device, takes up considerable space, and is a safety hazard. Through the use of the counterbalance of the instant invention, however, no additional space is required and effective counterbalancing is achieved. Significantly, this can be done even though the maximum torque requirements may be quite high, 56.5 N.m (500 inch pounds) or higher. Close approximation to the counterbalancing that is required in a given installation can be achieved through the use of the proper torsion element, such adjustment in the operative characteristics of that torsion element as are required may be achieved in a simple fashion, and then extremely accurate control of the final torque characteristics is achieved through simple cam design. The cam and spring function together to produce the desired counterbalance effect. The counterbalance can be located off the axis of the movable part, through the use of a flexible shaft connection. The structure can be adapted to virtually any spacing on the customer's equipment — there can be dead space in the center of the counterbalance device when the spacing required by the customer is great, or, if the space required by the customer is small, an end of the counterbalance device can extend out laterally beyond the part being controlled. Balanced spring and cam action can be accomplished with but a single torsion element. Not only can the cam be shaped to produce any desired torsional response, but even a detent action can be obtained if desired simply by modifying the cam shape. Damping can be easily achieved simply, by adding friction to the cam follower, but if that cam follower is relatively friction-free on the shaft on which it is mounted, the unit has very little hysteresis.

By forming the torsion member from a plurality of elongated polygonal rods formed into a bunch and mounted as disclosed, many advantages derive. For a given torque output characteristic, that arrangement takes up less weight and has a smaller diameter than a comparable coil spring, and will work in both rotative directions, whereas a coil spring will not. Over a single torsion bar it has the advantage that it can be much shorter while producing the desired degree of softness, and will allow much greater rotation without overstressing. Moreover, a wide variety of torsion characteristics can be achieved with the use of standardized construction. Although non-precision parts are involved, the torque output characteristics are quite uniform. There is a high consistency in production. The units are reliable, and very easily repaired. The individual rods are connected in parallel, so if one does break because of fatigue there is no catastrophic failure. Moreover, because of the use of a plurality of rods it is most unlikely that any given rod will become overstressed. The torsion member is extremely silent in operation, and the bunch of rods can be sealed against the environment. Non-rotative connections to the torsion member are easy to make because of its non-circular external configuration.

For a given amount of longitudinal space, this arrangement gives softer spring rates for a given load, and has greater angular travel capability for a given load, than other types of springs. The unit can be shorter than other units, and selection of a desired number of torsion rods provides many small increments in operating characteristics.

An important factor is that the spring elements are not subjected to surge problems, which normally lead to unequal load distribution, excessive wear and oscillation.

**Claims**

1. A counterbalance device to act between first and second parts (A and B) pivotally connected to one another, comprising a pair of spaced supports (18) adapted to be secured to said first part (A) and spaced from one another along an axis, socket members (24) secured to said supports (18), extending toward one another, and having recesses (26) facing one another along said axis, a longitudinally extending torsion member (D) having ends non-rotatably received in said recesses and extending along said axis, and a sleeve (E) extending between said socket members, said sleeve (E) and socket members (24) being relatively rotatable and said torsion member (D) being freely received within said sleeve (E), and means operatively connecting said torsion member (D) to said second part (B); characterized in that said sleeve (E) is mounted on said socket members (24) for rotation relative thereto, and in that said operative connecting means comprises anchor means (32) inside the sleeve (E) and non-rotatably connected to said torsion member (D) and non-rotatably connected to said sleeve (E) at a first point spaced from said socket members (24), and further means (F) externally non-rotatably mounted on said sleeve (E) at a second point axially spaced from said first point, whereby said sleeve (E) provides a structural driving connection between said torsion member (D) and said second part (B).

2. A counterbalance device according to Claim 1, including adaptors (28) non-rotatably received in said socket member recesses (26) and having polygonal second recesses (3) facing one another along said axis, the ends of said torsion member (D) being polygonal in cross-section and non-rotatably received in said second recesses (30).

3. A counterbalance device according to Claim 1 or Claim 2, in which said anchor means (32) is axially adjustably slidable on said torsion member (D) and is located approximately midway between said socket members (24).

4. A counterbalance device according to Claim 1 or Claim 2, in which said sleeve (E) has a central aperture, said anchor means (32) has a periphery (36) generally corresponding to said central aperture to thereby be axially slidably adjustable within said sleeve, said anchor means (32) having a polygonal through opening (34), and said torsion member (D) being polygonal in cross-section and slidably but non-rotatively received within said central through opening (34), said anchor means (32) being located approximately midway between said socket members (24).

5. A counterbalance device according to any preceding Claim, in which said first and second parts (A and B) are pivotally connected to one another to pivot about an axis spaced from said axis along which said supports (18) are spaced.

6. A counterbalance device according to any preceding Claim, in which said means (F) externally mounted on said sleeve (E) comprises an arm (16) extending radially from and non-rotatably secured to said sleeve (E) at a point axially spaced from said anchor means (32), a cam (10) adapted to be secured to said second part (B) radially spaced from said sleeve (E), and cam follower means (14) on said arm (16) engaging said cam (1), said torsion member (D) exerting a rotary force on said sleeve (E) in a direction to urge said follower means (14) against said cam (10).

7. A counterbalance device according to Claim 6, in which there are two sets of arms (16), cams (10) and cam followers (14) axially spaced from one another along the axis of said sleeve (E).

8. A counterbalance device according to Claim 6, in which there are two sets of arms (16), cams (10) and cam followers (14) axially spaced from one another along the axis of said sleeve (E) and axially spaced from said anchor means (32), said arms (16) being axially adjustably positionable along said sleeve (E).

9. A counterbalance device according to Claim 6, in which there are two sets of arms (16), cams (10) and cam followers (12) axially spaced from one another along the axis of said sleeve (E), said arms being axially adjustably positionable along said sleeve (E).

10. A counterbalance device according to Claim 7, in which said two sets of arms (16), cams (10) and cam followers (12) are axially spaced from one another in a balanced construction wherein said cam followers (12) are constrained by said sleeve (E) to move in coordination with each other.

11. A torsion spring device including an elongated sleeve (E), a pair of socket members (24) aligned with each other along the axis of the sleeve (E) and co-operating with opposite ends of said sleeve to provide bearing support for the sleeve, said socket members (24) being adapted to be secured non-rotatably to an external member and having respective recesses (26) that open towards each other, a torsion member (D) extending axially inside said sleeve (E) and having opposite end portions received non-rotatably in the recesses (26) of said socket members (24), and means (14, 16) for developing torsion in said torsion member (D), characterized in that said torsion member (D) comprises bundled rods of regular polygonal cross-section, in that there are anchor means (32) disposed between and spaced substantially from both of said recesses (26) for securing said sleeve (E) to said bundled rods, thereby developing two lengths of bundled rods extending between said sleeve (E) and said recesses (26), and in that said means (14, 16) for developing torsion in said bundled rods are secured to said sleeve (E) at a point axially spaced from said anchor means (32) for securing said sleeve (E) to said bundled rods, whereby the sleeve (E) provides a structural driving connection between said torsion member (D) and said means (14, 16) secured to said sleeve (E) for developing torsion in said bundled rods.

12. A torsion spring device according to Claim 11, wherein said bundled rods extend continuously between said opposite end portions and wherein said anchor means (32) for securing said sleeve to said bundled rods comprises at least one member (32; 32A, 32B) fixed non-rotatably to said sleeve (E) and having a through opening (34) through which said bundled rods extend non-rotatably relative to said sleeve (E).

13. A torsion spring device according to Claim 11 or Claim 12, wherein said bundled rods are divided into two separate, endwise aligned, torsion spring units (D1, D2) each having an end portion received in a respective one of said recesses (26), and wherein said anchor means for securing said sleeve (E) to said bundled rods comprises a pair of anchor members (32A, 32B) secured non-rotatably to said sleeve (E) and each of said anchor members (32A, 32B) having a through opening (34) that receives non-rotatably a portion of a respective one of said torsion spring units (D1, D2).

**Patentansprüche**

1. Ausgleichsvorrichtung zwischen einem ersten und einem zweiten schwenkbar miteinander verbundenen Teil (A bzw. B), bestehend aus zwei getrennten Trägern (18), die an dem ersten Teil (A) befestigt werden können und voneinander längs einer Achse in einem Abstand liegen, Buchsengliedern (24), die an den Trägern (18) befestigt sind, sich zueinander hin erstrecken und längs der Achse einander zugewandte Ausnehmungen (26) aufweisen, einem längs verlaufenden Torsionsteil (D) mit in den Ausnehmungen nichtdrehbaren, längs der Achse verlaufenden Enden und einer zwischen den Buchsengliedern (24) verlaufenden Muffe (E), wobei die Muffe und die Buchsenglieder (24) relativ drehbar sind und das Torsionsteil (D) frei in der Muffe (E) aufgenommen wird und eine Einrichtung, durch die das Torsionsteil (D) wirksam mit dem zweiten Teil (B) verbunden wird, dadurch gekennzeichnet, daß die Muffe (E) auf den Buchsengliedern (24) montiert ist zur relativen Verdrehung gegenüber diesen und daß die Einrichtung der wirksamen Verbindung einen Anker (32), der innerhalb der Muffe (E) liegt und nichtdrehbar mit dem Torsionsteil (D) sowie nichtdrehbar mit der Muffe (E) an einer ersten, von den Buchsengliedern (24) mit Abstand getrennten Stelle verbunden ist, und desweiteren eine Einrichtung (F) aufweist, die außen nichtdrehbar auf der Muffe (E) an einer zweiten, von der ersten Stelle in einem axialen Abstand liegenden Stelle eingesetzt ist, so daß die Muffe (E) eine strukturelle Antriebsverbindung zwischen dem Torsionsteils (D) und dem zweiten Teil (B) ergibt.

2. Ausgleichsvorrichtung nach Anspruch 1, gekennzeichnet durch Paßstücke, die nichtdrehbar von den Buchsengliederausnehmungen (26) aufgenommen werden und mehreckige zweite, einander längs der Achse zugewandte Ausnehmungen (3) aufweisen, wobei die Enden des Torsionsteils (D) im Querschnitt mehreckig sind und nichtdrehbar in den zeiten Ausnehmungen (30) aufgenommen werden.

3. Ausgleichsvorrichtung nach einem der vorhergehenden Ansprüche 1 oder 2, dadurch gekennzeichnet, daß der Anker (32) auf dem Torsionsteil (D) für die axiale Verschiebungen einstellbar und etwa mittig zwischen den Buchsengliedern (24) angeordnet ist.

4. Ausgleichsvorrichtung nach einem der vorhergehenden Ansprüche 1 oder 2, dadurch gekennzeichnet, daß die Muffe (E) eine Mittelöffnungn und der Anker einen Umfang (36) hat, der allgemein der Mittelöffnung entspricht, so daß er innerhalb der Muffe zur axialen Verschiebung einstellbar ist, wobei der Anker (32) eine mehreckige durchgehende Öffnung (34), das Torsionsteil (D) einen mehreckigen Querschnitt aufweist und nichtdrehend verschiebbar innerhalb der mittigen durchgehenden Öffnung (34) aufgenommen wird und wobei der Anker (32) etwa mittig zwischen den Buchsengliedern (24) angeordnet ist.

5. Ausgleichsvorrichtung nach einem der vorstehenden Ansprüche, dadurch gekennzeichnet, daß der erste und der zweite Teil (A und B) schwenkbar miteinander verbunden sind, um um eine Achse zu schwenken, die einen Abstand von der Achse aufweist entlang der die Träger (18) beabstandet sind.

6. Ausgleichsvorrichtung nach einem der vorhergehenden Ansprüche, dadurch gekennzeichnet, daß die außen auf der Muffe (E) befestigte Einrichtung (F) einen Arm (16), der von der Muffe (E) radial verläuft und an ihr nichtdrehbar an einer Stelle befestigt ist, die sich vom Anker (32) in einem Abstand befindet, einen Nocken (10), der an den zweiten, radial von der Muffe (E) in einem Abstand liegenden Teil (B) befestigt werden kann, und einen Nockenstößel (14) auf dem Arm (16) aufweist, der mit dem Nocken (1) in Eingriff kommt, wobei das Torsionsteil (D) auf die Muffe (E) in einer Richtung eine Drehkraft ausübt, um den Stößel (14) gegen den Nocken (10) zu drängen.

7. Ausgleichsvorrichtung nach Anspruch 6, dadurch gekennzeichnet, daß es zwei Sätze von Armen (16), Nocken (10) und Nockenstößel (14) gibt, die längs der Achse der Muffe (E) in einem axialen Abstand voneinander angeordnet liegen.

8. Ausgleichsvorrichtung nach Anspruch 6, dadurch gekennzeichnet, daß es zwei Sätze von Armen (16)a, Nocken (10) und Nockenstößel (14) gibt, die längs der Achse der Muffe (E) voneinander sowie vom Anker (32) in einem axialen Abstand angeordnet sind, wobei die Arme (16) stellungsmäßig längs der Muffe (E) axial einstellbar sind.

9. Ausgleichsvorrichtung nach Anspruch 6, dadurch gekennzeichnet, daß es zwei Sätze von Armen (16), Nocken (10) und Nockenstößel (14) gibt, die längs der Achse der Muffe (E) in einem axialen Abstand voneinander angeordnet liegen, wobei die Arme (16) stellungsmäßig längs der Muffe (E) axial einstellbar sind.

10. Ausgleichsvorrichtung nach Anspruch 7, dadurch gekennzeichnet, daß die beiden Sätze von Armen (16), Nocken (10) und Nockenstößel (12) in einer ausgeglichenen Konstruktion in einem axialen Abstand voneinander angeordnet liegen, wobei die Nockenstößel (12) von der Muffe (E) dazu gezwungen werden, sic miteinander koordiniert zu bewegen.

11. Torsionsfedervorrichtung mit einer länglichen Muffe (E), zwei Buchsengliedern (24), die miteinander längs der Achse der Muffe (E) ausgerichtet sind und mit dern gegenüberliegenden Enden der Muffe zusammenarbeiten, um für die Muffe eine tragende Auflage zu bilden, wobei die Buchsenglieder (24) an einem Außenglied nichtdrehbar befestigt werden können und diesbezüglicher befestigt werden können und diesbezügliche Ausnehmungen (26) aufweisen, die sich zueinander hin öffnen, ein Torsionsteil (D) axial innerhalb der Muffe (E) verläuft und gegenüberliegende Endabschnitte aufweist, die nichtdrehbar in den Ausnehmungen (26) der Buchsenglieder (24) aufgenommen werden, und wobei eine Einrichtung (14, 16) zum Entwickeln von Torsion im Torsionsteil (D) vorgesehen ist, dadurch gekennzeichnet, daß das Torsionsteil (D) gebündelte Stäbe von regelmäßigem mehreckigen Querschnitt aufweist, daß ein Anker (32) zwischen den sowie in einem wesentlichen Abstand von den beiden Ausnehmungen (26) angeordnet ist, um die Muffe (E) an den gebündelten Stäben (26) zu befestigen, so daß zwei Längen gebündelter Stäbe entstehen, die sich zwischen der Muffe (E) und Ausnehmungen (26) erstrecken, und daß die Einrichtung (14, 16) zum Entwickeln von Torsion in den gebündelten Stäben zum Befestigen der Muffe (E) an den gebündelten Stäben mit der Muffe (E) an einer Stelle verbunden ist, die zum Anker (32) in einem axialen Abstand liegt, so daß die Muffe (E) eine strukturelle antreibende Verbindung zwischen dem Torsionsteil (D) und der Einrichtung (14, 16) ergibt, die zur Entwicklung der Torsion in den gebündelten Stäben an der Muffe (E) befestigt ist.

12. Torsionsfedervorrichtung nach Anspruch 12, dadurch gekennzeichnet, daß sich die gebündelten Stäbe kontinuierlich zwischen den gegenüberliegenden Endabschnitten erstecken und daß der Anker (32) für die Befestigung der Muffe an den gebündelten Stäben zumindest ein Glied (32; 32A, 32B) aufweist, das nichtdrehbar an der Muffe (E) befestigt ist und eine durchgehende Öffnung (34) besitzt, durch die hindurch gie gebündelten Stäbe gegenüber der Muffe (E) nichtdrehbar verlaufen.

13. Torsionsfedervorrichtung nach den Ansprüchen 11 oder 12, dadurch gekennzeichnet, daß die gebündelten Stäbe aufgeteilt sind in zwei getrennte, mit ihren Enden ausgerichteten Torsionsfedereinheiten (D1, D2), von denen jede einen Endabschnitt besitzt, der in einer jeweilig entsprechenden Ausnehmung aufgenommen wird, und daß der Anker für die Befestigung der Muffe (E) an den gebündelten Stäben zwei Ankerglieder (32A, 32B) aufweist, die an der Muffe (E) nichtdrehbar befestigt sind und von denen einjedes eine durchgehende Öffnung (34) besitzt, die einen nichtdrehbaren Abschnitt eines der jeweils entsprechenden Torsionsfedereinheiten (D1, D2) aufnimmt.

**Revendications**

1. Dispositif de compensation destiné à opérer entre une première et une seconde pièces (A et B) reliées l'une à l'autre de manière pivotante, comprenant une paire de supports espacés (18) pouvant être fixés à ladite première pièce (A) et espacés l'un de l'autre le long d'un axe, des éléments de douille (24) fixés auxdits supports (18), s'étendant l'un vers l'autre et présentant des creux (26) se faisant face le long dudit axe, un organe de torsion (D) s'étendant longitudinalement présentant des extrémités logées de manière non rotative dans lesdits creux et s'étendant le long dudit axe, et un manchon (E) s'étendant entre lesdits éléments de douille, ledit manchon (E) et lesdits éléments de douille (24) étant rotatifs l'un par rapport à l'autre et ledit organe de torsion (D) étant librement logé à l'intérieur dudit manchon (E), et des moyens reliant activement ledit organe de torsion (D) à ladite seconde pièce (B); caractérisé en ce que ledit manchon (E) est monté sur lesdits éléments de douille (24) de façon à tourner par rapport à ceux-ci, et en ce que lesdits moyens de liaison active comprennent des moyens d'ancrage (32) à l'intérieur du manchon (E), reliés de manière non rotative audit organe de torsion (D) et reliés de façon non rotative audit manchon (E) en un premier point espacé desdits éléments de douille (24), ainsi que des moyens (F) montés extérieurement de manière non rotative sur ledit manchon (E) en un second point axialement espacé dudit premier point, le manchon (E) assurant ainsi une liaison motrice structurelle entre ledit organe de torsion (D) et ladite seconde pièce (B).

2. Dispositif de compensation suivant la revendication 1, comprenant des adapteurs (28) logés de manière non rotative dans lesdits creux (26) des éléments de douille et ayant des seconds creux polygonaux (30) se faisant face le long dudit axe, les extrémités dudit organe de torsion (D) étant de secton transversale polygonale et étant logés de manière non rotative dans lesdits seconds creux (30).

3. Dispositif de compensation suivant la revendication 1 ou 2, dans lequel lesdits moyens d'ancrage (32) sont réglables par glissement axial sur ledit organe de torsion (D) et sont disposés approximativement à mi-distance entre lesdits éléments de douille (24).

4. Dispositif de compensation suivant la revendication 1 ou 2, dans lequel ledit manchon (E) présente une ouverture centrale, lesdits moyens d'ancrage (32) ont un périmètre (36) qui correspond généralement à ladite ouverture centrale pour être ainsi réglables par glissement axial à l'intérieur dudit manchon (E), lesdits moyens d'ancrage (32) comportant une ouverture passante polygonale (34), et ledit organe de torsion (D) étant de section transversale polygonale et logé de manière glissante mais non rotative à l'intérieur de ladite ouverture passante centrale (34), lesdits moyens d'ancrage (32) étant disposés approximativement à mi-distance entre lesdits éléments de douille (24).

5. Dispositif de compensation suivant l'une ou l'autre des revendications précédentes, dans lequel lesdits première et seconde pièces (A et B) sont articulées l'une à l'autre de façon à pivoter autour d'un axe espacé dudit axe le long duquel lesdits supports (18) sont espacés.

6. Dispositif de compensation suivant l'une ou l'autre des revendications précédentes, dans lequel lesdits moyens (F) extérieurement montés sur ledit manchon (E) comprennent un bras (16) s'étendant radialement à partir dudit et fixé de façon non rotative audit manchon (E) en un point axialement espacé desdits moyens d'ancrage (32), une came (10) pouvant être fixée à ladite seconde pièce (B), radialement à distance dudit manchon (E), et des moyens de galet (14) sur ledit bras (16) appliqués sur ladite came (10), ledit organe de torsion (D) exerçant une force de rotation sur ledit manchon (E) dans une direction où elle pousse lesdits moyens de galet (14) contre ladite came (10).

7. Dispositif de compensation suivant la revendication 6, dans lequel il y a deux ensembles de bras (16), de cames (10) et de galets (14), axialement espacés l'un de l'autre le long de l'axe dudit manchon (E).

8. Dispositif de compensation suivant la revendication 6, dans lequel il y a deux ensembles de bras (16), de cames (10) et de galets (14), axialement espacés l'un de l'autre le long de l'axe dudit manchon (E) et axialement espacés desdits moyens d'ancrage (32), lesdits bras (16) étant axialement réglables en position le long dudit manchon (E).

9. Dispositif de compensation suivant la revendication 6, dans lequel il y a deux ensembles de bras (16), de cames (10) et de galets (14), axialement espacés l'un de l'autre le long de l'axe dudit manchon (E), lesdits bras étant axialement réglables en position le long dudit manchon (E).

10. Dispositif de compensation suivant la revendication 7, dans lequel lesdits deux ensembles de bras (16), de cames (10) et de galets (14) sont axialement espacés l'un de l'autre dans une construction équilibrée dans lequelle lesdits galets (14) sont forcés par ledit manchon (E) de se mouvoir en synchronisme l'un avec l'autre.

11. Dispositif à ressort de torsion comprenant un manchon allongé (E), une paire d'éléments de douille (24) alignés l'un par rapport à l'autre le long de l'axe du manchon (E) et coopérant avec les extrémités opposées dudit manchon pour assurer un support portant au manchon, lesdits éléments de douille (24) pouvant être fixés de manière non rotative à un organe extérieur et présentant des creux respectifs (26) qui s'ouvrent l'un vers l'autre, un organe de torsion (D) s'étendant axialement à l'intérieur dudit manchon (E) et ayant des portions d'extrémité opposées logées de manière non rotative dans les creux (26) desdits éléments de douille (24), et des moyens (14, 16) pour développer une torsion dans ledit organe de torsion (D), caractérisé en ce que ledit organe de torsion (D) comprend un faisceau de barres de section transversale polygonale régulaire, en ce que des moyens d'ancrage (32) sont disposés entre et à distance substantiellement desdits deux creux (26) pour fixer ledit manchon (E) audit faisceau de barres, développant ainsi deux longueurs de faisceau de barres s'étendant entre ledit manchon (E) et lesdits creux (26), et en ce que lesdits moyens (14, 16) pour développer une torsion dans ledit faisceau de barres sont fixés audit manchon (E) en un point axialement espacé desdits moyens d'ancrage (32) pour fixer le manchon (E) audit faisceau de barres, le manchon (E) assurant de ce fait une liaison motrice structurale entre ledit organe de torsion (D) et lesdits moyens (14, 16) fixés audit manchon (E) pour développer une torsion dans ledit faisceau de barres.

12. Dispositif à ressort de torsion suivant la revendication 11, dans lequel ledit faisceau de barres s'étend de manière continue entre lesdits portions d'extrémité opposées et dans lequel lesdits moyens d'ancrage (32) pour fixer ledit manchon audit faisceau de barres comprennent au moins un élément (32; 32A, 32B) fixé de manière non rotative audit manchon (E) et présentant une ouverture passante (34) à travers laquelle ledit faisceau de barres s'étend de manière non rotative par rapport audit manchon (E).

13. Dispositif à ressort de torsion suivant la revendication 11 ou 12, dans lequel ledit faisceau de barres est divisé en deux unités (D1, D2) de ressorts de torsion séparées, alignées bout-à-bout, chacune ayant une portion d'extrémité logée respectivement dans un desdits creux (26), et dans lequel lesdits moyens d'ancrage pour fixer ledit manchon (E) audit faisceau de barres comprennent une paire d'éléments d'ancrage (32A, 32B) fixés de manière non rotative audit manchon (E) et chacun desdits éléments d'ancrage (32A, 32B) présentant une ouverture passante (34) qui reçoit de manière non rotative une portion d'une desdites unités de ressorts de torsion (D1, D2) respectivement.

F I G.1

F I G.2

FIG.3

EP 0 119 346 B1

FIG. 4

# FIG.5

EP 0 119 346 B1

FIG.6

# FIG.7

EP 0 119 346 B1

# F I G.8

A

B

C

D

E

# F I G.9

B

C

D

E

F

F I G. 11

F I G.12

F I G.13

F I G.14

F I G.15

F I G.10

F I G.17

F I G.16

F I G.18

F I G. 19

F I G. 20